(19) Europäisches Patentamt
European Patent Office
Office européen des brevets

(11) Veröffentlichungsnummer: **0 256 125**
**A1**

(12) # EUROPÄISCHE PATENTANMELDUNG

Veröffentlicht nach Art. 158 Abs. 3 EPÜ

(21) Anmeldenummer: **86902261.6**

(22) Anmeldetag: **27.12.85**

Daten der zugrundeliegenden internationalen Anmeldung:

(86) Internationale Anmeldenummer:
**PCT/SU85/00106**

(87) Internationale Veröffentlichungsnummer:
**WO87/04188 (16.07.87 87/15)**

(51) Int. Cl.$^3$: **C 12 Q 1/18**
C 12 Q 3/00, A 01 N 47/14

(43) Veröffentlichungstag der Anmeldung:
**24.02.88 Patentblatt 88/8**

(84) Benannte Vertragsstaaten:
**CH DE FR GB IT LI**

(71) Anmelder: **IRKUTSKY INSTITUT ORGANICHESKOI KHIMII SIBIRSKOGO OTDELENIA AKADEMII NAUK SSSR**
**ul. Favorskogo 1**
**Irkutsk, 664033(SU)**

(71) Anmelder: **NAUCHNO-PROIZVODSTVENNOE OBIEDINENIE PIVOBEZALKOGOLNOI PROMYSHLENNOSTI**
**ul. Rossolimo 7**
**Moscow, 119012(SU)**

(72) Erfinder: **VORONKOV, Mikhail Grigorievich**
**ul. Lermontova, 315-32**
**Irkutsk, 664033(SU)**

(72) Erfinder: **TROFIMOV, Boris Alexandrovich**
**ul. Lermontova, 321a-32**
**Irkutsk, 664033(SU)**

(72) Erfinder: **YASHNOVA, Praskovya Mikhailovna**
**Leninsky pr., 156-272**
**Moscow, 117571(SU)**

(72) Erfinder: **GOLIKOVA, Nina Vasilievna**
**ul. Chusovskaya, 11-4-59**
**Moscow, 107207(SU)**

(72) Erfinder: **ISAEVA, Valeria Sergeevna**
**ul. V. Ulbrikhta, 8-42**
**Moscow, 125067(SU)**

(72) Erfinder: **RATTEL, Natalya Nikolaevna**
**Tsvetnoi bulvar, 22-53**
**Moscow, 103051(SU)**

(72) Erfinder: **AMOSOVA, Svetlana Viktorovna**
**ul. Lermontova, 289-29**
**Irkutsk, 664033(SU)**

(72) Erfinder: **IVANOVA, Nina Ivanovna**
**ul. Lermontova, 271-26**
**Irkutsk, 664033(SU)**

(72) Erfinder: **ALPERT, Margarita Leonidovna**
**ul. Lermontova, 317-26**
**Irkutsk, 664033(SU)**

(72) Erfinder: **ROZHKOVA, Olga Ivanovna**
**Pogranichny per., 6-53**
**Irkutsk, 664046(SU)**

(74) Vertreter: **von Füner, Alexander, Dr. et al,**
**Patentanwälte v. Füner, Ebbinghaus, Finck Mariahilfplatz 2 & 3**
**D-8000 München 90(DE)**

(54) **MITTEL ZUR VERHÜTUNG DES MIKROBIOLOGISCHEN WACHSTUMS AUF HARTEN MATERIALIEN.**

(57) Das Mittel, das zur Verhinderung der mikrobiologischen Bewachsung einer harten Oberfläche vorgesehen ist, enthält als Wirkstoff das Salz der N-(Vinyloxyethyl)dithiocarbaminsäure folgender Formel:

$$[CH_2 = CHOCH_2CH_2NHC(S)S]_nM,$$

worin für K, Na, Zn, Cu steht und n - 1,2 ist, in einer Menge von 0,05 bis 0,15 Masse% und eine Trägersubstanz. Das genannte Mittel verwendet man in einer Menge von 0,25 bis 0,5 g, bezogen auf den Wirkstoff, je 1 m$^2$ der Oberfläche.

EP 0 256 125 A1

256125

# MITTEL ZUR VERHINDERUNG DER MIKROBIOLOGISCHEN BEWACHSUNG EINER HARTEN OBERFLÄCHE

## Gebiet der Technik

Die vorliegende Erfindung bezieht sich auf das Gebiet des Schutzes harter Oberflächen vor Zerstörung durch Einwirkung von Mikroorganismen und insbesondere betrifft die Erfindung Mittel, die zur Verhinderung der mikrobiologischen Bewachsung harter Oberflächen, beispielsweise, von Wand- und Deckenoberflächen von Räumen und Ausrüstungen verschiedener Zweckbestimmung, darunter von Ausrüstungen für Nahrungsgüterindustrie, vorgesehen sind.

## Vorhergehender Stand der Technik

Bekannt ist, daß die Oberflächen von Räumen verschiedener Zweckbestimmung, insbesondere von Lagerräumen, Stallräumen (Kuhställen, Pferdeställen, Schweineställen und anderen), sowie von Oberflächen der Räume und Ausrüstungen der Nahrungsgüterindustrie von verschiedenen Mikroorganismen, beispielsweise, mit Schimmelpilzen, Bakterien, Hefen und hefeählichen Pilzen infiziert werden.

Ein besonders akutes Problem entsteht durch die mikrobiologische Bewachsung von Oberflächen der Innenräume in einigen Produktionen der Nahrungsgüterindustrie, beispielsweise, in der Bierbräuerei, Weinkelterei, bei der Herstellung alkoholfreier Getränke und anderer. Infolge der spezifischen Verfahrensbedingungen in diesen Produktionen, insbesondere der erhöhten Feuchtigkeit und des erschwerten Luftaustausches, werden Wände, Decken und Ausrüstungen mit Mikroorganismen, zunächst mit Schimmelpilzen und dann mit Bakterien infiziert. Das verursacht die Infizierung und das Verderben der herzustellenden Nahrungsgüter. Durch die regenerierende Mikroflora ist es erforderlich, 2 bis 3 Mal im Jahr die mikrobiologische Bewachsung von Wänden und Decken mittels ihrer mechanischen Entfernung mit anschließendem Anstreichen beziehungsweise Weißen der Oberfläche zu vernichten.

Der Schutz von Oberflächen, insbesondere von Bauanlagen, vor mikrobiologischer Bewachsung ist äußerst kompliziert, da die Verwendung biozider Stoffe nicht immer effek-

BAD ORIGINAL

tiv ist, weil viele dieser Stoffe ihre biozide Aktivität bei ihrer Einführung in eine Trägersubstanz verlieren. Der Verlust an Aktivität der bioziden Stoffe ist auf mehrere Ursachen, beispielsweise, auf die Absorption biozider Stoffe durch poröse Materialien infolge der Kapillarkräfte sowie auf das chemische Umsetzung zwischen den bioziden Stoffen und den Verbindungen zurückzuführen, aus denen sich die Baustoffe zusammensetzen.

Lack- und Farbstoffe, die für das Anstreichen technologischer Ausrüstungen verschiedener Produktionen eingesetzt werden, werden ebenfalls von Pilzen befallen. Farben auf der Grundlage von natürlichen Ölen werden ebenfalls mikrobiologisch beschädigt.

Mittel, die zur Verhinderung der mikrobiologischen Bewachsung harter Oberflächen vorgesehen sind, sollen folgenden Anforderungen entsprechen:

- Kombination der fungiziden und bakteriziden Aktivität;
- Beibehalten der Aktivität des bioziden Wirkstoffes bei seiner Einführung in eine Trägersubstanz;
- Stabilität der Eigenschaften gegenüber der Einwirkung von Außenbedingungen (Feuchtigkeit, Temperatur, Verunreinigung der Atmosphäre);
- geringe Toxizität:
- Fehlen eines unangenehmen Geruchs;
- Wirtschaftlichkeit;
- Zugänglichkeit.

Bekannt sind mehrere verschiedene chemische Stoffe, die eine biozide Aktivität aufweisen und die zur Verhinderung der mikrobiologischen Bewachsung von Oberflächen der Bauanlagen und Ausrüstungen verwendet werden. Keines dieser Mittel entspricht jedoch den genannten Anforderungen.

Bekannt ist die Verwendung einer 2%igen Lösung des Natmethylsilikonats (Hydrophobisierungsmittel) mit Zusatz von Zinkchlorid und Kupfersulfat zur Bearbeitung von Auskleidungsmaterialien aus weißem Zement, Tuffstein und Muschelkalkstein. Das genannte Mittel vereint jedoch nicht die fungizide und die bakterizide Aktivität.

Zur Verhinderung des Schimmelbefalls der Wände aus

BAD ORIGINAL

Gipsbeton, die mit einer Öl-Leim-Spachtelmasse und mit Wasser-Emulsionsfarben gestrichen wurden, werden Zusätze eines zinnorganischen Biozids, Lastanox, verwendet, das man in den Gipsbeton in einer Menge von 0,02 Masse% und die Spachtelmasse und die Farbe in einer Menge von 0,05 Masse% einführt. Obwohl die fungizide Aktivität der genannten Verbindung hoch ist, ist sie jedoch hochtoxisch und schwerzugänglich.

Zur Verhinderung der Pilzbewachsung harter Oberflächen verwendet man ein Mittel, das 2-Hydroxydiphenyl und Kalziumfluorid und als Trägersubstanz einen Gipsputz enthält.

Die Beständigkeit des Tünchmörtels auf der Grundlage von Kreide beziehungsweise von Kalk gegenüber Pilzen wird durch die Einführung 1,5 bis 2 Masse% Natriumfluorid beziehungsweise Natriumfluorsilikat in denselben gewährleistet.

Mittel auf der Grundlage der Fluorverbindungen weisen eine hohe fungizide Aktivität auf, ihre Verwendung ist jedoch nicht indifferent gegenüber der Umwelt.

Zur Verhinderung der Pilzbewachsung der Oberflächen verwendet man auch Kreide- und Kalküberzüge, die Emulsionen einer siliziumorganischen Flüssigkeit enthalten. Diese Stoffe verleihen einer Oberfläche Hydrophobie, ihre fungizide Aktivität ist jedoch dabei unzureichend hoch. Alle genannten Mittel wurden im Buch von F.M. Ivanov, S.N. Gorshin "Biopovrezhdenia v stroitelstve" (Biobeschädigungen im Bauwesen) beschrieben, veröffentlicht 1984, Verlag Stroiizdat (Moskau), Seiten 38-39.

Bis in letzter Zeit wurden umfassend Lack- und Farbstoffe eingesetzt, die als Biozidstoff Quecksilberverbindungen, beispielsweise, Phenylmerkuroleat aufweisen. Obwohl diese Verbindungen hocheffektiv und relativ billig sind, reduziert sich ihre Anwendung jedoch infolge ihrer hohen Toxizität.

Zum bekannten Biozid für Lack- und Farbstoffe gehört 2-n-Oktyl-4-isothiazolinon-3. Diese Verbindung ist beständig gegenüber erhöhter Feuchtigkeit und ist bei einer Kon-

BAD ORIGINAL

zentration von 0,4 Masse% effektiv. Ihre Herstellung verläuft jedoch mehrstufig.

Zur Verhinderung der mikrobiologischen Bewachsung der Wände von Weinkellern werden Überzüge verwendet, die Fluorverbindungen, und zwar Alkalifluoride enthalten (Handbuch von T.S.Bobkov, I.V.Zolochevskaya, A.K.Kudakova und L.N. Chekunova "Beschädigung von Industriematerialien und Erzeugnissen durch Einwirkung von Mikroorganismen" - Povrezhdenie promyshlennykh materialov i izdely pod vozdeistviem mikroorganizmov - veröffentlicht im Jahre 1971, Verlag Moskauer Universität, Moskau, Seite 148).

Ein Mittel, das Kupfersulfat in einer Menge von 2 bis 4 Masse% in einem 20 bis 30%igen wäßrigen Kalkmörtel aufweist, wird infolge der Zugänglichkeit der aktiven Substanz breit eingesetzt, seine biozide Wirkung ist jedoch ungenügend effektiv.

Ein bekanntes Mittel, das eine 10 bis 20%ige Lösung der Hexafluorkieselsäure darstellt, hat infolge hoher Konzentrationen des Wirkstoffes und einer relativ geringen Effektivität keine umfassende Anwendung gefunden.

Die Verwendung des Kalkmörtels, der 1 bis 5 Masse% Fluoran enthält, ist zwar nach seiner bioziden Aktivität effektiv, aber nicht wirtschaftlich genug.

Die Verwendung eines Kalkmörtels, der 5 bis 7 Masse% Heryl aufweist, ist ebenfalls nicht wirtschaftlich genug, genauso wie die Verwendung von Fluoran, infolge der hohen Konzentration des Wirkstoffes.

Bei dem Anstreichen von Oberflächen ist die Verwendung von Ölfarbe mit einem fungiziden Zusatz, Unikolor, bekannt. Eine solche Farbe verhindert hauptsächlich die Entwicklung der Pilzmikroflora aber nicht der Bakterienmikroflora. Die obengenannten Mittel wurden im Buch von F.Glavachek u. A. Lkhotsky, "Pivovarenie" - Bierbrauerei -, veröffentlicht 1977, Verlag "Pischevaya promyshlennost", /Moskau/, Seite 395 beschrieben.

In den USA wird in der Lebensmittelindustrie beim Anstreichen von Kühlkammern, Brotbäckereien, Fleisch- und Milchlagerräumen und anderen Räumen der Nahrungsgüterbetriebe ein

Präparat, Dovezyl c-13 auf der Grundlage von 2,3,5,6-Tetrachlor-4-(methylsulfonyl)pyridin, verwendet, das in Öl- und Latexfarben in einer Menge von 0,5 bis 1 Masse% eingeführt wird. Obwohl das genannte Präparat wenig toxisch ist und die fungizide und bakterizide Aktivität in sich vereint, ist seine Herstellung jedoch äußerst kompliziert.

In der UdSSR wird zur Verhinderung der mikrobiologischen Bewachsung harter Oberflächen von Räumen in der Industrie ein Mittel verwendet, das von 0,025 bis 0,1 Masse% 8-Hydroxychinolin enthält.

Dieses Mittel ist in seiner bakteriziden Wirkung nicht effektiv genug. Die genannten Mittel wurden im Buch von F.M.Ivanov, S.N. Gorshin "Biopovrezhdenia v stroitelstve" (Biobeschädigungen im Bauwesen), veröffentlicht 1984, Verlag Stroiizdat, Moskau, Seite 40, beschrieben.

Demzufolge ist unter der Vielzahl der bekannten Mittel, die für die Verhinderung der mikrobiologischen Bewachsung harter Oberflächen vorgesehen sind, kein Mittel vorhanden, das gleichzeitig die fungizide und bakterizide Wirkung besitzt, wenig toxisch und nicht teuer ist.

Offenbarung der Erfindung

Die Aufgabe der vorliegenden Erfindung bestand in der Suche nach einem derartigen Mittel zur Verhinderung der mikrobiologischen Bewachsung harter Oberflächen, welches gleichzeitig eine hohe fungizide und bakterizide Aktivität während einer längeren Zeitspanne aufwies, das wenig toxisch und nicht teuer ist, das gegenüber der Einwirkung von äußeren Bedingungen, insbesondere gegenüber Feuchtigkeit, beständig ist.

Die gestellte Aufgabe wurde durch die Entwicklung eines Mittels zur Verhinderung der mikrobiologischen Bewachsung harter Oberflächen, das einen Wirkstoff mit biozider Aktivität und einen Träger aufweist, das, erfindungsgemäß, dadurch gekennzeichnet wird, daß es als Wirkstoff mit bioziden Eigenschaften des Salz der N-(Vinyloxyethyl)dithio arbaminsäure folgender Formel enthält:

$$[CH_2 = CHOCH_2CH_2NHC(S)S]_n M,$$

worin M für K, Na, Zn, Cu steht, n - 1,2 ist.

Der genannte Stoff weist gleichzeitig eine hohe fungizide und bakterizide Aktivität auf, ist wenig toxisch und erhält beim Betrieb während einer längeren Zeit seine hohen bioziden Eigenschaften sogar unter den Bedingungen einer hohen Feuchtigkeit. Die genannten Salze sind in ihrem Wert nicht teuer und können in einem einfachen Verfahren aus zugänglichen Komponenten hergestellt werden.

Der Gehalt an dem genannten Wirkstoff in dem erfindungsgemäßen Mittel beträgt von 0,05 bis 0,15 Masse%. Diese Menge ist für eine vollständige Hemmung der Entwicklung verschiedenartiger Bakterien und Pilze ausreichend. Das ist dadurch begründet, daß der Gehalt an dem Wirkstoff unter 0,05 Masse% für die erforderliche Effektivität unzureichend sein wird, während ein Gehalt an demselben über 0,15 Masse% keinen zusätzlichen Effekt bringt.

Das genannte Mittel wird in einer Menge von 0,25 bis 0,5 g, bezogen auf den Wirkstoff, je 1 $m^2$ der jeweiligen Oberfläche verwendet. Die Verwendung des Mittels in einer Menge unter 0,25 g, bezogen auf den Wirkstoff, bringt keinen erwünschten Effekt, und seine Verwendung in einer Menge über 0,5 g bringt keinen zusätzlichen fungiziden und bakteriziden Effekt und führt zu einem ungerechtfertigten Verbrauch an Reagenzien.

Als Träger kann ein Lösungsmittel beziehungsweise ein fester Füllstoff auftreten, der üblicherweise zum Weißen beziehungsweise zum Anstreichen der Oberflächen von Räumen und Ausrüstungen verwendet wird.

Als Lösungsmittel können Wasser, organische Lösungsmittel (Azeton, Alkohol und andere) verwendet werden. Als fester Füllstoff kann Kreide, Kalk, Farben, die zum Anstreichen einer Oberfläche eingesetzt werden, Verputz, Spachtelmasse und ein beliebiger anderer passender Füllstoff auftreten, der zum Überzug einer Oberfläche verwendet wird.

Das erfindungsgemäße Mittel kann auf eine Oberfläche in an sich bekannter Weise, beispielsweise, mit einem Pinsel, durch Spritzen und Durchtränkung aufgetragen werden. Beim Auftreten mikrobiologischer Bewachsung an einer Oberfläche soll diese vor dem Auftragen des Mittels entfernt werden.

Das Verfahren zur Herstellung des erfindungsgemäßen Mittels ist einfach und besteht in der einfachen mechanischen Vermischung des Wirkstoffe in den genannten Mengen mit der Trägersubstanz.

Falls als Trägersubstanz ein Lösungmittel verwendet wird, wird der Wirkstoff mit dem Lösungsmittel vermischt, und die hergestellte Lösung trägt man mittels Zerstäuben, Verspritzen auf die jeweilige Oberfläche beziehungsweise mittels Durchtränkung der Oberfläche aufgetragen.

Die genannten Salze der N-(Vinyloxyethyl)dithiocarbaminsäure sind für die Warmblüter wenig toxisch. So beträgt $LD_{50}$ für das Natrium-N-(vinyloxyethyl)dithiocarbamat 260 mg/kg (bei der intraabdominalen Einführung bei weißen Mäusen), für Kalium-N-(vinyloxyethyl)dithocarbamat - 1400±350 mg/kg (bei der peroralen Einführung bei weißen Mäusen), für Kupfer-N-(vinyloxyethyl)-dithiocarbamat - 267 mg/kg (bei der intraabdominalen Einführung bei weißen Mäusen) und für Zink-bis-(N-vinyloxyethyl)-dithiocarbamat - 1120 ± 260 mg/kg (bei der peroralen Einführung bei weißen Mäusen).

Kalium- und Natriumsalze der N-(Vinyloxyethyl)dithiocarbaminsäure können bei der Umsetzung des Vinyloxyethylamins, des Schwefelkohlenstoffs und des Kalium- beziehungsweise Natriumhydroxids in einem wäßrigen Medium beziehungsweise im Medium eines organischen Lösungsmittels hergestellt werden.

Zink- und Kupfersalze der der N-(Vinyloxyethyl)dithiocarbaminsäure erhält man aus dem genannten Kaliumsalz der N-(Vinyloxyethyl)dithiocarbaminsaure durch Substitution mittels ihrer Behandlung mit wasserlöslichen Zink- beziehungsweise Kupfersalzen.

Vinyloxyethylamin kann durch Umsetzung des Monoethanolamins mit Azetylen in Gegenwart eines Alkalihydroxids hergestellt werden.

Beste Ausführungsvariante der Erfindung

Das beste Mittel zur Verhinderung der mikrobiologischen Bewachsung harter Oberflächen ist ein Mittel, das als einen Stoff mit biozider Aktivität Kalium-N-(vinyloxyethyl)dithiocarbamat beziehungsweise Zink-bis-(N-vinyloxyethyl)

dithiocarbamat und als eine Trägersubstanz Kalk, Kreide beziehungsweise Ölfarben enthält. Das genannte Mittel wird durch mechanisches Vermischen von 0,1 Masse% Wirkstoff mit einer Trägersubstanz hergestellt. Das genannte Mittel trägt man in beliebigem bekannten Verfahren in einer Menge von etwa 0,5 g, bezogen auf den Wirkstoff, je 1 $m^2$ Oberfläche auf.

Zur besseren Erläuterung der vorliegenden Erfindung werden Beispiele angeführt, von denen Beispiele 1 bis 5 die Herstellung der Salze der N-(Vinyloxyethyl)dithiocarbaminsäure veranschaulichen, Beispiele 6 bis 15 veranschaulichen ihre fungizide und bakterizide Aktivität und Beispiele 16 bis 22 veranschaulichen das Mittel und seine Verwendung.

Beispiel 1

Synthese des Kalium-N-(vinyloxyethyl)dithiocarbamats.

Zu 34,8 g (0,4Mol)Vinyloxyethylamin setzt man 11,2 g 0,2 Mol) Kaliumhydroxids hinzu, wonach man unter Vermischen 15,2 g (0,2 Mol) Schwefelkohlenstoff zusetzt und dann bei einer Temperatur von 40 bis 45°C fünf Stunden lang vermischt. Den Überschuß an Vinyloxyethylamin wird abdestilliert. Kristalliner Rückstand wäscht man mit 10 ml Ethanol und dann mit 15 ml Diethylether. Kristalle werden getrocknet. Man erhält 31,8 g Endprodukt, die Ausbeute beträgt 79%. Der Stoff stellt ein weißes Pulver mit cremefarbener Schattierung und schwachem spezifischem Geruch dar, er ist gut löslich in Wasser, teilweise im Alkohol und Azeton und unlöslich im Diethylether. Er ist lagerbeständig. Molekularmasse beträgt 201. Schmelzpunkt - 180°C, $LD_{50}$ = 1400± 350 mg/kg bei peroraler Einführung bei weißen Mäusen.

Beispiel 2. Synthese von Natrium-N-(vinyloxyethyl)dithiocarbamat.

Zu 50 ml (0,517 Mol) Vinyloxyethylamin und 13,8 g (0,344 Mol) Natriumhydroxid fügt man 20,7 ml (0,344 Mol) Schwefelkohlenstoff in 27 ml Benzol hinzu . Nach der Beendigung der Reaktion destilliert man Benzol und teilweise Wasser ab. Den Rückstand wäscht man mit einem Gemisch aus Diethylether und Ethylalkohol in einem Verhältnis 3:1 aus. Man erhält 48,4 g (76%) Endprodukt, das ein weißes Pulver

mit schwachem spezifischen Geruch darstellt, in Wasser gut löslich. teilweise im Alkohol und Azeton löslich und im Diethylether unlöslich ist, es ist lagerbeständig und für Warmblütler wenig toxisch, die Molekularmasse beträgt 185, Schmelzpunkt 172°C, $LD_{50}$ = 260 mg/kg bei intraabdominaler Einführung bei weißen Mäusen.

Beispiel 3. Synthese von Kupfer-N-(vinyloxyethyl)dithiocarbamat.

Zu 201 g (I Mol) Kalium-N-(vinyloxyethyl)dithiocarbamat, das gemäß Beispiel 1 hergestellt und in 250 ml Wasser aufgelöst wurde, fügt man unter Vermischen 99 g (I Mol) Kupfermonochlorid, das in 100 ml Wasser bei einer Temperatur von 30 bis 35°C aufgelöst ist, hinzu. Das Reaktionsgemisch hält man bei einer Temperatur von 55 bis 60°C während 3 bis 5 Minuten unter ständigem Vermischen auf einem Wasserbad. Das Reaktionsgemisch wird abfiltriert, der Rückstand abdestilliert, mit 100 ml Ethylalkohol und dann mit 60 ml Diethylether gewaschen und getrocknet, man erhält 225, 8 g (100 %) Endprodukt. Der Stoff stellt ein dunkelgrünes Pulver ohne Geruch dar; es ist in Wasser und im Diethylether unlöslich, im Dimethylsulfoxid gut und im Azeton und Alkohol teilweise löslich. Es ist lagerbeständig. Die Molekularmasse beträgt 226, Schmelzpunkt von 128 bis 130°C. $LD_{50}$ = 267 mg/kg bei intraabdominaler Einführung bei weißen Mäusen.

Beispiel 4. Synthese von Kupfer bis-(N-vinyloxyethyl) dithiocarbamat.

Zu 100,5 g (0,5 Mol) Kalium-N-(vinyloxyethyl)dithiocarbamat, das gemäß Beispiel 1 hergestellt und in 500 ml Wasser aufgelöst wurde, fügt man unter Vermischen 46,9 g (0,25 Mol) Kupfernitrat zu, das in 200 ml Wasser aufgelöst ist. Die entstandenen Kristalle von gelber Farbe wäscht man mit Wasser, mit Methylalkohol und Diethylether und trocknet. Man erhält 55,3 g (57%) Endprodukt. Der Stoff hat einen schwach spezifischen Geruch, ist in Diethylether nicht löslich, begrenzt löslich im Wasser, Ethylalkohol und Azeton und gut löslich im Dimethylsulfoxid. Es ist lagerbeständig. Die Molekularmasse beträgt 388, Schmelzpunkt 121°C.

Beispiel 5. Synthese von Zink-bis(N-vinyloxyethyl)di-

thio arbamat.

Zu 120,6 g (0,6 Mol) Kalium-N-(vinyloxyethyl)dithio arbamat, das gemäß Beispiel 1 hergestellt und in 150 ml Wasser unter Vermischen aufgelöst wurde, fügt man 40,9 g (0,3 Mol) Zinkchlorid, das in 50 ml Wasser aufgelöst ist, hinzu. Die Reaktion verläuft exotherm (auf 60 bis 65°C) und dauert 30 bis 40 Minuten. Danach wird das Gemisch spontan auf Raumtemperatur abgekühlt. Der entstandene weiße Rückstand wird abfiltriert, mit 100 ml Azeton und dann mit 60 ml Diethylether gewaschen, bei Raumtemperatur getrocknet; man erhält 112,8 g (96,5%) Endprodukt. Der Stoff stellt ein weißes Pulver dar, hat keinen Geruch, ist in Wasser unlöslich, begrenzt im Azeton und Alkohol löslich, und gut im Dimethylsulfoxid löslich. Die Molekularmasse beträgt 390, Schmelzpunkt 103°C, $LD_{20}$ =1120±260 mg/kg bei peroraler Einführung bei weißen Mäusen.

Beispiel 6. Fungizide Aktivität von Zink-bis-(N-vinyloxyethyl)dithiocarbamat.

Man prüfte die funguzide Aktivität von Zink-bis-(N-vinyloxyethyl)dithiocarbamat gegenüber den reinen Pilzkulturen: Gladosporium resinae, Cladosporium cladosporioides, Acremonium corvum, Acremonium charticola, Penicillium charlesii Smith, Walrotiela subiculesa, Geotrichum candidum Link, Oidium, Penicillium crysogenum. Die genannten Pilze wurden von den Oberflächen der Wände und Decken von Bierbrauereien und Werken für die Herstellung von alkoholfreien Getränken ausgeschieden.

Es wurden Lösungen des Zink-bis-(N-vinyloxyethyl)dithiocarbamats im Azeton verschiedener Konzentration hergestellt, die so berechnet wurde, daß bei der Einführung von 1 ml Lösung in 10 ml des geschmolzenen Würzeagars (45-50°C) die Konzentration des genannten Stoffes im Medium von 0,0015 bis 0,012% betrug. In eine der Petri-Schalen wurde Nährboden mit 1 ml Azeton (Kontrolle) gegossen.

In 18 bis 20 Stunden nach dem Vergießen des Nährbodens in die Petri-Schalen führte man die Inokulation der reinen Pilzkultur durch, die vorher an einem Schräg-Würzeagar während 15 Tage gezüchtet wurden. Die Inkubation führte man bei

einer Temperatur von 25 bis 27°C während 5 Tage durch. Danach wurde der Durchmesser der Pilzkolonien gemessen und der Prozentsatz der Hemmung des Wachstums des Myzeliums (S) nach der Abbott -Formel gezählt: $S = \frac{dc - de}{dc} \cdot 100$ worin $d_c$ Durchmesser der Pilzkolonien in Kontrolle ist, $d_e$ = Durchmesser der Pilzkolonien in einer Schale mit dem Nährboden ist, der Zink-bis-(N-vinyloxyethyl)dithiocarbamat enthält.

Die Ergebnisse der Prüfungen sind in der Tabelle 1 aufgeführt.

Tabelle 1

Fungizide Aktivität von Zink bis-(N-vinyloxyethyl)dithiocarbamat gegenüber den Schimmelpilzen, die die Bewachsung von Oberflächen hervorrufen

| lfd. Nr. | Konzentration des Stoffes | Hemmung des Myzeliums am 5. Tag des Wachstums, % | | | |
|---|---|---|---|---|---|
| | | Cladosporium resinae | Cladosporium cladosporioides | Acremonium corvum | Acremonium charticola |
| 1 | 2 | 3 | 4 | 5 | 6 |
| 1 | 0,012 | 100 | 100 | 100 | 100 |
| 2 | 0,006 | 100 | 100 | 100 | 100 |
| 3 | 0,003 | 100 | 100 | 100 | 100 |
| 4 | 0,0015 | 37,5 | 100 | 40 | 50 |

Fortsetzung Tabelle 1

| lfd. Nr. | Penicillium chrysogenum | Penicillium charlesii | Walrotiela subiculesa | Geotrichum candidum Link | Oidium |
|---|---|---|---|---|---|
| 1 | 7 | 8 | 9 | 10 | 11 |
| 1 | 100 | 100 | 100 | 100 | 100 |
| 2 | 80 | 100 | 100 | 100 | 100 |
| 3 | 40 | 100 | 100 | 100 | 100 |
| 4 | 10 | 90 | 52 | 29 | 80 |

Aus den Angaben der Tabelle 1 ist zu ersehen, daß das Zink-bis-(N-vinyloxyethyl)dithiocarbamat die Entwicklung aller untersuchten Pilze in einer Konzentration von 0,012% vollständig hemmte. In niedrigeren Konzentrationen bis auf 0,003% beobachtete man die Hemmung der Entwicklung aller Pilze, mit Ausnahme der Pilze Penicillium chrysogenum.

Beispiel 7. Fungizide Aktivität von Kalium N-(vinyloxyethyl)-dithiocarbamat.

Die fungizide Aktivität von Kalium-N-(vinyloxyethyl) dithiocarbamat wurde nach der Methode gemäß Beispiel 6 geprüft.

Der genannte Stoff wurde in einer Konzentration von 0,00075 bis 0,012 Masse% verwendet.

Die Ergebnisse der Prüfungen sind in der Tabelle 2 aufgeführt.

Tabelle 2

Fungizide Aktivität des Kalium-N-(vinyloxyethyl)dithiocarbamats gegenüber den Schimmelpilzen, die die Bewachsung von Oberflächen hervorrufen

| lfd. Nr. | Konzentration des Stoffes,% | Hemmung des Myzeliums am 5. Tag des Wachstums, % | | | |
|---|---|---|---|---|---|
| | | Cladosporium resinae | Cladosporium cladosporioides | Acremonium corvum | Acremonium charticola |
| 1 | 2 | 3 | 4 | 5 | 6 |
| 1 | 0,012 | 100 | 100 | 100 | 100 |
| 2 | 0,006 | 100 | 100 | 100 | 100 |
| 3 | 0,003 | 100 | 100 | 100 | 100 |
| 4 | 0,0015 | 100 | 100 | 100 | 100 |
| 5 | 0,00075 | 70 | 100 | 94 | 90 |

Tabelle 2 (Fortsetzung)

| lfd. Nr. | Penicillium chrysogenum | Penicillium charlesii Smith | Walrotiela subiculesa | Geotrichum candidum Link | Oidium |
|---|---|---|---|---|---|
| 1 | 7 | 8 | 9 | 10 | 11 |
| 1 | 100 | 100 | 100 | 100 | 100 |
| 2 | 90 | 90 | 100 | 100 | 100 |
| 3 | 55 | 55 | 100 | 100 | 100 |
| 4 | 30 | 30 | 100 | 40 | 96 |
| 5 | 0 | 5 | 90 | 10 | 40 |

Aus den Angaben der Tabelle 2 ist zu ersehen, daß das Kalium-N-(vinyloxyethyl)dithiocarbamat in einer Konzentration von 0,012% die Entwicklung der Schimmelpilze, die die Bewachsung von Oberflächen hervorrufen, vollständig hemmt. In niedrigeren Konzentrationen bis auf 0,003% hat dieser Stoff die Entwicklung aller untersuchten reinen Pilzkulturen, mit Ausnahme der Pilze p.Penicillium, vollständig verhindert.

Beispiel 8. Fungizide Aktivität von Natrium-N-(vinyloxyethyl)dithiocarbamat

Die fungizide Aktivität des Natrium-N-(vinyloxyethyl)dithiocarbamats wurde nach der Methode gemäß Beispiel 6 geprüft.

Das Natrium N-(vinyloxyethyl)dithiocarbamat wurde in einer Konzentration von 0,0015 bis 0,012 Masse% verwendet.

Die Ergebnisse der Prüfungen sind in der Tabelle 3 aufgeführt.

Tabelle 3

Fungizide Aktivität des Natrium-N-(vinyloxyethyl)dithiocarbamats gegenüber den Schimmelpilzen, die die Bewachsung von Oberflächen hervorrufen

| lfd. Nr. | Konzentration des Stoffes,% | Hemmung des Myzeliums am 5. Tag des Wachstums, % | | | |
|---|---|---|---|---|---|
| | | Cladosporium resinae | Cladosporium cladosporioides | Acremonium corvum | Acremonium charticola |
| 1 | 2 | 3 | 4 | 5 | 6 |
| 1 | 0,012 | 100 | 100 | 100 | 100 |
| 2 | 0,006 | 100 | 100 | 100 | 100 |
| 3 | 0,003 | 100 | 100 | 100 | 100 |
| 4 | 0,0015 | 100 | 100 | 100 | 100 |

Tabelle 3 (Fortsetzung)

| lfd. Nr. | Penicillium chrysogenum | Penicillium charlesii Smith | Walrotiela subiculesa | Geotrichum candidum Link | Oidium |
|---|---|---|---|---|---|
| 1 | 7 | 8 | 9 | 10 | 11 |
| 1 | 100 | 100 | 100 | 100 | 100 |
| 2 | 80 | 90 | 100 | 75 | 100 |
| 3 | 20 | 40 | 100 | 40 | 100 |
| 4 | 5 | 25 | 100 | 5 | 60 |

Somit ist die Effektivität des Natrium-N-(vinyloxyethyl)dithiocarbamats gegenüber den Schimmelpilzen, die die Bewachsung von Oberflächen hervorrufen, ähnlich der Effektivität des Kaliumsalzes der N-(Vinyloxyethyl)dithiocarbaminsäure. Bei einer Konzentration von 0,012% wurde eine vollständige Hemmung des Wachstums aller untersuchten Pilze nachgewiesen, bei geringeren Konzentrationen wurde das Wachstum der Schimmelpilze p.Penicillium, Geotrichum candidum Link beobachtet.

Beispiel 9. Fungizide Aktivität von Kupfer-bis-(N-vinyloxyethyl)dithiocarbamat.

Die fungizide Aktivität des Kupfer-bis-(N-vinyloxyethyl)dithiocarbamats wurde nach der Methode gemäß Beispiel 6 geprüft.

Das Kupfer-bis-(N-vinyloxyethyl)dithiocarbamat wurde in einer Konzentration von 0,005 bis 0,1 Masse% verwendet.

Die Ergebnisse der Prüfungen sind in der Tabelle 4 aufgeführt.

Tabelle 4

Fungizide Aktivität des Kupfer-bis-(N-vinyloxyethyl)dithiocarbamats gegenüber den Schimmelpilzen, die die Bewachsung harter Oberflächen hervorrufen

| lfd. Nr. | Konzentration des Stoffes, % | Hemmung des Myzeliums am 5. Tag des Wachstums, % | | | |
|---|---|---|---|---|---|
| | | Cladosporium resinae | Cladosporium cladosporioides | Acremonium corvum | Acremonium charticola |
| 1 | 2 | 3 | 4 | 5 | 6 |
| 1 | 0,10 | 100 | 100 | 100 | 100 |
| 2 | 0,05 | 90 | 80 | 100 | 100 |
| 3 | 0,02 | 80 | 65 | 100 | 100 |
| 4 | 0,01 | 34 | 36 | 100 | 96 |
| 5 | 0,005 | | 15 | 100 | 70 |

Tabelle 4 (Fortsetzung)

| lfd. Nr. | Penicillium chrysogenum | Penicillium charlesii Smith | Geotrichum candidum Link | Walrotiela subiculesa |
|---|---|---|---|---|
| 1 | 7 | 8 | 9 | 10 |
| 1 | 100 | 100 | 100 | 100 |
| 2 | 70 | 100 | 100 | 37 |
| 3 | 36 | 80 | 100 | 10 |
| 4 | 25 | 30 | 100 | 0 |
| 5 | 10 | 15 | 100 | 0 |

Die erhaltenen Angaben zeigen, daß das Kupfer-bis-(N-vinyloxyethyl)dithiocarbamat eine bestimmte fungizide Aktivität gegenüber den Schimmelpilzen aufweist, wenn auch in einem geringeren Maße als Kalium-, Natrium- und Zinksalz der N-(vinyloxyethyl)dithiocarbaminsäure. Die vollständige Hemmung der Entwicklung der zu untersuchenden Pilze wurde lediglich bei der Verwendung des genannten Stoffes in einer

Konzentration von 0,1% festgestellt.

Beispiel 10. Fungizide Aktivität von Kupfer-N-(vinyloxyethyl)dithiocarbamat.

Die fungizide Aktivität des Kupfer-N-(vinyloxyethyl)-dithiocarbamats wurde nach der Methode gemäß Beispiel 6 geprüft.

Der genannte Stoff wurde in einer Konzentration von 0,05 bis 0,15 Masse% verwendet.

Die Ergebnisse der Prüfungen sind in der Tabelle 6 aufgeführt.

Tabelle 5

Fungizide Aktivität von Kupfer-N-(vinyloxyethyl)dithiocarbamat gegenüber den Schimmelpilzen, die die Bewachsung von Oberflächen hervorrufen

| lfd. Nr. | Konzentration des Stoffes, % | Hemmung des Myzeliums am 5.Tag des Wachstums, % | | | |
|---|---|---|---|---|---|
| | | Cladosporium resinae | Cladosporium cladosporioides | Acremonium corvum | Acremonium charticola |
| 1 | 2 | 3 | 4 | 5 | 6 |
| 1 | 0,15 | 100 | 100 | 100 | 100 |
| 2 | 0,1 | 43 | 100 | 100 | 100 |
| 3 | 0,05 | 34 | 45 | 50 | 43 |

Tabelle 5 (Fortsetzung)

| lfd. Nr. | Penicillium chrysogenum | Penicillium charlesii Smith | Walrotiela subiculesa | Geotrichum candidum Link | Oidium |
|---|---|---|---|---|---|
| 1 | 7 | 8 | 9 | 10 | 11 |
| 1 | 85 | 92 | 100 | 100 | 100 |
| 2 | 24 | 56 | 100 | 50 | 67 |
| 3 | 4 | 24 | 30 | 3 | 0 |

Die Ergebnisse zeigen, daß eine vollständige Hemmung des Pilzwachstums lediglich bei der Verwendung der Verbindung in einer Konzentration von 0,15% erfolgte.

Beispiel 11. Bakterizide Aktivität von Kalium-N-(vinyloxyethyl)dithiocarbamat.

Die bakterizide Aktivität des Kalium-N-(vinyloxyethyl)-dithiocarbamats gegenüber den Bakterien, die von der Oberfläche von Wänden und Decken der Produktionsräume

von Brauereien und Fabriken zur Herstellung von alkoholfreien Getränken ausgeschieden wurden und die zu p.p.Bacillus, Micrococcus, Pseudomonas, Escherichiae gehören, wurde geprüft.

Es wurden wäßrige Lösungen des genannten Stoffes verschiedener Konzentration hergestellt, die so berechnet wurde, daß bei Einführung von 1 ml der Lösung in 25 ml geschmolzenen agarisierten Nährboden (45-50°C) die Konzentration des Stoffes im Nährboden von 0,003 bis 0,5% betrug. In 18 bis 24 Stunden wurde auf die Oberfläche des Nährbodens 0,1 ml der wäßrigen Suspension der eintägigen reinen Bakterienkulturen aufgetragen, die am Fleisch-Pepton-Agar gezüchtet wurden. Die Suspension wurde gleichmäßig verteilt. In Kontrollschalen wurden 0,1 ml Wasser auf der Oberfläche des Närhbodens verteilt.

Die Inkubation führte man bei einer Temperatur von 37°C während 5 Tage durch.

Die effektive Wirkung des Stoffes wurde nach dem Auftreten des Bakterienwachstums an der Oberfläche des Nährbodens bewertet.

Die Ergebnisse der Prüfungen sind in der Tabelle 6 aufgeführt, in der die Angaben der Prüfungen zum Nachweis der bakteriziden Aktivität des Kalium-, Natrium-, Zink- und Kupfersalzes der N-(Vinyloxyethyl) dithiocarbaminsäure zusammengefaßt sind.

Tabelle 6

Konzentration der Salze der N-(vinyloxyethyl)dithiocarbaminsäure (100%), die das Wachstum der Bakterien am 5. Tag des Wachstums hemmen, die die Bewachsung von Oberflächen hervorrufen

| lfd. Nr. | Bezeichnung der Bakterien | Salz der N-(vinyloxyethyl)dithiocarbaminsäure | |
|---|---|---|---|
| | | Kaliumsalz | Natriumsalz |
| 1 | 2 | 3 | 4 |
| 1. | p.Bacillus | 0,05 | 0,075 |
| 2. | p.Micrococcus | 0,05 | 0,075 |
| 3. | p.Pseudomonas | 0,05 | 0,075 |
| 4. | p. Escherichiae | 0,05 | 0,075 |

Tabelle 6 (Fortsetzung)

| lfd. Nr. | Zinksalz | disubstituiertes Kupfersalz | monosubstituiertes Kupfersalz |
|---|---|---|---|
| 1 | 5 | 6 | 7 |
| 1. | 0,05 | 0,15 | 0,25 |
| 2. | 0,05 | 0,15 | 0,25 |
| 3. | 0,05 | 0,15 | 0,25 |
| 4. | 0,05 | 0,15 | 0,25 |

Der genannte Stoff hemmte in einer Konzentration von 0,05% das Wachstum der Bakterien vollständig.

Beispiel 12. Bakterizide Aktivität von Natrium-N-(vinyloxyethyl)dithiocarbamat.

Es wurde die bakterizide Aktivität des Natrium-N-(vinyloxyethyl)dithiocarbamats geprüft.

Die Methode der Prüfungen war der in Beispiel 11 beschriebenen ähnlich. Die Ergebnisse der Prüfungen sind in Tabelle 6 angeführt, aus deren Angaben zu ersehen ist, daß der genannte Stoff bakterizide Aktivität aufwies, aber eine geringere als das Kaliumsalz des N-(vinyloxyethyl)dithiocarbamats.

Beispiel 13. Bakterizide Aktivität von Zink-bis-(N-vinyloxyethyl)dithiocarbamat.

Es wurde die Prüfung der bakteriziden Aktivität des Zink-bis-(N-vinyloxyethyl)dithiocarbamats durchgeführt. Die Methode der Prüfung war gemäß Beispiel 11.

Die Ergebnisse der Prüfungen sind in der Tabelle 6 angeführt.

Der Stoff weist eine bakterizide Aktivität auf, die der Aktivität des Kalium-N-(vinyloxyethyl)dithiocarbamats gleich ist.

Beispiel 14. Bakterizide Aktivität von Kupfer-bis-(N-vinyloxyethyl)dithiocarbamat.

Es wurde die Prüfung der bakteriziden Aktivität des Kupfer-bis-(N-vinyloxyethyl)dithiocarbamats durchgeführt. Die Methode der Prüfungen war gemäß Beispiel 11.

Die Ergebnisse der Prüfungen sind in Tabelle 6 aufgeführt.

Der Stoff weist bakterizide Aktivität auf, aber eine

etwas niedrigere im Vergleich zum Kalium- und Natriumsalz der N-(vinyloxyethyl)dithiocarbaminsäure und des Zink-bis-(N-vinyloxyethyl)dithiocarbamats.

Beispiel 15. Bakterizide Aktivität von Kupfer-N-(vinyloxyethyl)dithiocarbamat.

Es wurden Prüfungen der bakteriziden Aktivität des Kupfer-N-(vinyloxyethyl)dithiocarbamats durchgeführt. Die Methode der Prüfungen war gemäß Beispiel 11.

Die Ergebnisse der Prüfungen sind in der Tabelle 6 aufgeführt.

Der genannte Stoff weist bakterizide Aktivität, jedoch eine niedrigere als in den vorangegangenen Fällen auf.

Beispiel 16. Herstellung eines Mittels unter Verwendung des Kalium-N-(vinyloxyethyl)dithiocarbamats und seine Anwendung.

Man brachte das Kalium-N-(vinyloxyethyl)dithiocarbamat in eine wäßrige Kalklösung in einer Menge von 1 g/l (Konzentration 0,1 Masse%) ein, und das Gemisch wurde vermischt. Das hergestellte Mittel war hierdurch gebrauchsfertig. Das Mittel wurde mittels Verspritzen in einer Menge von 0,25 g, bezogen auf den Wirkstoff je 1 $m^2$ der Oberfläche der Wände und Decken des Hopfenlagerraums (Feuchtigkeit des Raums beträgt 65%) einer Bierbrauerei aufgetragen. Zur Kontrolle wurde ein Abschnitt der Wand und der Decke mit Kalkmörtel geweißt, der das genannte Salz nicht enthielt.

Die Bewachsung des Kontrollabschnittes mit Pilz- und Bakterienmikroflora begann 9 Monate nach dem Auftragen des Kalkmörtels, und der Oberflächen, die mit dem genannten Mittel bearbeitet wurden, begann diese Bewachsung nach 16 Monaten.

Beispiel 17. Herstellung eines Mittels unter Verwendung des Kalium-N-(vinyloxyethyl)dithiocarbamats und seine Anwendung.

Das Kalium-N-(vinyloxyethyl)dithiocarbamat wurde in wäßrigen Kalkmörtel in einer Menge von 1,5 g/l (Konzentration 0,15 Masse%) eingeführt, und das Gemisch wurde vermischt. Das dadurch hergestellte Mittel wurde mittels Verspritzen auf die Oberfläche der Wände der Nachgärungsstation einer Bier-

0256125

brauerei (Feuchtigkeit des Raumes betrug 85%) in einer Menge von 0,5 g, bezogen auf den Wirkstoff, je 1 $m^2$ der Oberfläche aufgetragen.

Da die Oberfläche der Wände der Nachgärungsstation in einem beträchtlichen Maße mit Pilz- und Bakterienmikroflora bewachsen war, wurde sie vor dem Auftragen des Mittels auf die Oberfläche der Wände sorgfältig mechanisch (mit einem Kratzeisen) von dem Pilz- und Bakterienbelag gereinigt. Zur Kontrolle wurde ein Abschnitt der Wand mit dem Kalkmörtel bearbeitet (geweißt), der dieses Salz nicht enthielt.

Die Bewachsung des Kontrollabschnittes mit Pilzmikroflora begann nach 3 Monaten und mit Bakterienmikroflora nach 4 Monaten. Die Pilzbewachsung des Abschnittes, der mit dem erfindungsgemäßen Mittel überzogen wurde, begann nach 13 Monaten und die Bakterienbewachsung nach 15 Monaten.

Beispiel 18. Herstellung des Mittels unter Verwendung des Zink-bis-(N-vinyloxyethyl)dithiocarbamats und seine Anwendung.

Das Zink-bis-(N-vinyloxyethyl)dithiocarbamat wurde in einen wäßrigen Kalkmörtel in einer Menge von 0,5 g/l (Konzentration betrug 0,05 Masse%) eingeführt, und das Gemisch wurde vermischt.

Die hergestellte Lösung wurde mit einem Pinsel in einer Menge von 0,4 g, bezogen auf den Wirkstoff je 1 $m^2$ die Oberfläche der Decke der Hefestation einer Bierbrauerei (Feuchtigkeit des Raumes betrug 80%) aufgetragen. Zur Kontrolle wurde ein Abschnitt der Decke mit dem Kalkmörtel ohne Zusatz des erfindungsgemäßen Stoffes geweißt.

Die mikrobiologische Bewachsung des Kontrollabschnittes begann nach 3 Monaten und des mit dem genannten Mittel geweißten Abschnittes begann nach 10 Monaten.

Beispiel 19. Herstellung eines Mittels unter Verwendung des Zink- bis-(N-vinyloxyethyl)dithiocarbamats und seine Verwendung.

Das Zink- bis-(N-vinyloxyethyl)dithiocarbamat wurde in den wäßrigen Kalkmörtel in einer Menge von 0,5 g/l (Konzentration betrug 0,05 Masse%) eingeführt.

Das Gemisch wurde vermischt. Das hergestellte Mittel

wurde zum Weißen der Decke der Abfüllstation eines Werkes zur Herstellung von alkoholfreien Getränken (Feuchtigkeit des Raumes betrug 60%) verwendet. Das Weißen erfolgte mittels Verspritzen in einer Menge von 0,3 g, bezogen auf den Wirkstoff, je 1 $m^2$ der Oberfläche. Zur Kontrolle wurde ein Abschnitt der Decke mit einem Kalkmörtel ohne Zusatz des genannten Stoffes geweißt. Die mikrobiologische Bewachsung des Kontrollabschnittes begann nach 10 Monaten und des Abschnittes, der mit dem genannten Mittel bearbeitet wurde, nach 19 Monaten.

Beispiel 20. Herstellung eines Mittels unter Verwendung des Zink-bis-(N-vinyloxyethyl)dithiocarbamats und seine Anwendung.

Das Zink-bis-(N-vinyloxyethyl)dithiocarbamat wurde in Ölfarbe in einer Menge von 0,5 g/l (Konzentration betrug 0,05 Masse%) eingeführt. Das Gemisch wurde vermischt. Mit dem hergestellten Mittel wurde die Außenoberfläche der Behälter des Lagerraums und des Raums für die Vorbereitung von Rohstoffen eines Werkes zur Herstellung alkoholfreier Getränke (Feuchtigkeit des Raumes betrug 72%) angestrichen. Das Mittel wurde in einer Menge von 0,5 g, bezogen auf den Wirkstoff, je 1 $m^2$ der Oberfläche aufgetragen. Mehrere Behälter wurden mit Ölfarbe ohne Zusatz des Wirkstoffes angestrichen (Kontrollbehälter). Die mikrobiologische Bewachsung der Kontrollbehälter wurde nach 5 Monaten und der Behälter, die mit dem genannten Mittel angestrichen wurden, nach 12 Monaten festgestellt.

Beispiel 21. Herstellung eines Mittels unter Verwendung des Natrium-N-(vinyloxyethyl)dithiocarbamats und seine Anwendung.

Das Natrium-N-(vinyloxyethyl)dithiocarbamat wurde in eine Nitrofarbe in einer Menge von 1,5 g/l (Konzentration betrug 0,15 Masse%) eingeführt. Das hergestellte Mittel wurde mittels Verspritzen in einer Menge von 0,25 g/$m^2$ auf die Außenoberfläche der Gärtanks in der Gärstation einer Bierbrauerei (Feuchtigkeit des Raumes betrug 85%) aufgetragen. Mehrere Gärtanks wurden mit einer Farbe ohne Zusatz des genannten Stoffes derselben (Kontrolltanks) angestrichen. Die mikrobiologische Bewachsung der Kontrollbehälter wurde nach

4 Monaten und der Gärtanks, die unter Verwendung des erfindungsgemäßen Mittels angestrichen wurden, nach 8 Monaten nachgewiesen.

Beispiel 22. Herstellung eines Mittels unter Verwendung des Kalium-N-(vinyloxyethyl)dithiocarbamats und seine Anwendung.

Das Kalium-N-(vinyloxyethyl)dithiocarbamat wurde in Ölfarbe in einer Menge von 1 g/l (Konzentration betrug 0,1 Masse%) eingeführt. Das Gemisch wurde vermischt. Das dadurch hergestellte Mittel wurde mit einem Pinsel in einer Menge von 0,4 g, bezogen auf den Wirkstoff, je 1 $m^2$ Oberfläche der Wände der Gärstation und der Station für die Vorbereitung von Rohstoffen eines Werkes für die Herstellung alkoholfreier Getränke (Feuchtigkeit des Raumes betrug 70%) aufgetragen. Zur Kontrolle wurde ein Abschnitt der Wand mit einer Farbe angestrichen, die kein Kalium-N-(vinyloxyethyl)-dithiocarbamat enthält. Die mikrobiologische Bewachsung des Kontrollabschnittes begann nach 3 Monaten und der Bewuchs der Oberfläche der Wände, die mit dem erfindungsgemaßen Mittel angestrichen wurden, begann nach 9 Monaten.

Industrielle Anwendbarkeit

Das erfindungsgemäße Mittel kann mittels seiner Auftragung auf die Oberflache von Räumen und Ausrüstungen beliebiger Zweckbestimmung eingesetzt werden, wo die Möglichkeit der Infizierung der Oberfläche von Wänden, Dekken, Fußböden und Ausrüstungen mit Pilz- und Bakterienmikroflora, insbesondere von Produktionsräumen mit erhöhter Feuchtigkeit, darunter Räumen zur Lebensmittelherstellung (Malzproduktion, Bierbrauerei, Herstellung alkoholfreier Getränke, Weinbereitung und ähnliches) besteht.

Das Mittel kann zur Behandlung der Oberflächen von Lagerräumen (darunter auch für Nahrungsrohstoffe und -gütern), landwirtschaftlichen Räumen, Wohnräumen und Abteilungen verschiedener Produktionen eingesetzt werden.

PATENTANSPRÜCHE:

1. Mittel zur Verhinderung der mikrobiologischen Bewachsung harter Oberflächen, das einen Wirkstoff mit biozider Aktivität und eine Trägersubstanz vorsieht, dadurch gekennzeichnet, daß es als Wirkstoff das Salz der N-(vinyloxyethyl)dithiocarbaminsäure folgender Formel

$$[CH_2 = CHOCH_2CH_2NHC(S)S]_nM,$$

worin M für K, Na, Zn, Cu steht n - 1,2 ist, enthält.

2. Mittel nach Anspruch 1, dadurch gekennzeichnet, daß der Gehalt an Wirkstoff von 0,05 bis 0,15 Masse% beträgt.

3. Mittel nach Anspruch 1 und 2, dadurch gekennzeichnet, daß das Mittel in einer Menge von 0,25 bis 0,5 g, bezogen auf den Wirkstoff, je 1 $m^2$ der Oberfläche verwendet wird.

# INTERNATIONAL SEARCH REPORT

International Application No PCT/SU 85/00104 

**I. CLASSIFICATION OF SUBJECT MATTER** (if several classification symbols apply, indicate all) [8]

According to International Patent Classification (IPC) or to both National Classification and IPC

$IPC^4$: C 12 Q 1/18, 3/00, A 01 N 47/14

**II. FIELDS SEARCHED**

Minimum Documentation Searched [7]

| Classification System | Classification Symbols |
|---|---|
| $IPC^4$ | C 12 Q 1/18, 3/00, A 01 N 47/14 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | US, A, 3238094, (Monsanto Company), 01 March 1966 (01.03.66), see the claims | 1 |
| A | US, A, 3549771, (Crown Zellerbach Corporation), 22 December 1970 (22.12.70), see the claims | 1 |
| A | US, A, 3298911, (Sandoz Ltd.), 17 January 1967 (17.01.67), see the claims | 1 |
| A | SU, A1, 444847, (Schelkovsky filial Vsesojurnogo nauchno-issledovatelskogo instituta khimicheskikh sredstv zaschity rasteny et al.) 19 November 1974 (19.11.74), see the claims | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 26 June 1986 (26.06.86) | 10 September 1986 (10.09.86) |
| **International Searching Authority** | **Signature of Authorized Officer** |
| ISA/SU | |

Form PCT/ISA/210 (second sheet) (January 1985)